# FASCICULE DE BREVET EUROPEEN

(11) **EP 1 692 884 B1**
(45) Date de publication et mention de la délivrance du brevet: **01.06.2011**
(21) Numéro de dépôt: 04805679.0
(22) Date de dépôt: 09.12.2004
(51) Int. Cl.: H04W 88/06

(54) **DISPOSITIF DE RADIOCOMMUNICATION CAPABLE DE FONCTIONNER SELON DEUX STANDARDS DE COMMUNICATION**
FUNKKOMMUNIKATIONSGERÄT MIT DER FÄHIGKEIT ZUM BETRIEB GEMÄSS ZWEI KOMMUNIKATIONSSTANDARDS
RADIOCOMMUNICATIONS DEVICE CAPABLE OF OPERATING ACCORDING TO TWO COMMUNICATIONS STANDARDS

(30) Priorité: 11.12.2003 FR 0314556
(43) Date de publication de la demande: 23.08.2006
(73) Titulaire: Sierra Wireless, 92442 Issy-les-Moulineaux Cedex (FR)
(72) Inventeur: SITTLER, François, FR- 35235 Thorigne-Fouillard (FR); MATHE, Jacques, F-22710 Penvenan (FR)
(74) Mandataire: Bioret, Ludovic
(86) Numéro de dépôt international: PCT/FR2004/003176
(87) Numéro de publication internationale: WO 2005/060278

(56) Documents cités:
- EP-A- 0 978 939
- EP-A- 1 026 908
- EP-A- 1 178 445
- WO-A-01/93614
- HAARTSEN J C: "THE BLUETOOTH RADIO SYSTEM" IEEE PERSONAL COMMUNICATIONS, IEEE COMMUNICATIONS SOCIETY, US, vol. 7, no. 1, février 2000 (2000-02), pages 28-36, XP000908653 ISSN: 1070-9916
- FRANZ SCHNYDER, CRISTOPH HALLER: "Implementation of FM delodulator algotithm on a high performance digital signal processor" HSR HOCHSCHULE FÜR TECHNIK RAPPAERSWILL, [Online] 11 janvier 2002 (2002-01-11), pages 1-93, XP002288978 Extrait de l'Internet: URL:http://www.medialab.ch/archiv/pdf_stud ien_diplomarbeiten/ da01/fm_demodulator(haller&schnyder).pdf> [extrait le 2004-07-19] cité dans la demande

## Description

Le domaine de l'invention est celui des radiocommunications, et plus précisément des dispositifs de radiocommunication, tels que notamment les radiotéléphones.

Les techniques de radiocommunication font régulièrement l'objet de nombreux développements et améliorations. Ainsi, pour lutter contre l'encombrement des bandes de fréquence et pour permettre le fonctionnement des radiotéléphones dans de nombreux pays, on a développé des appareils capables de fonctionner dans plusieurs (classiquement deux) bandes de fréquence, tant en émission qu'en réception.

Ces appareils, connus sous le nom de radiotéléphones quadri-bandes, sont capables de sélectionner une bande de fréquence parmi les deux disponibles, en fonction des besoins, de l'encombrement du réseau, de la zone géographique,...

Les moyens d'émission et de réception doivent bien sûr être adaptés pour fonctionner dans ces différentes bandes.

Un inconvénient des radio-téléphones est que leur fonctionnement suppose la mise en oeuvre d'une infrastructure complexe et coûteuse (stations de base), couvrant des zones géographiques relativement limitées (cellules). Dans les zones peu fréquentées, de tels moyens ne sont généralement pas déployés. Il n'est alors pas possible de communiquer à l'aide de son radiotéléphone.

On connaît par ailleurs, depuis très longtemps, des dispositifs de communication sur de faibles distances, dits « talkie-walkie ». Ces dispositifs fonctionnent de façon analogique, en mettant classiquement en oeuvre une modulation de fréquence ou d'amplitude. Ils utilisent la même bande de fréquence, ce qui suppose que la liaison est du type simplex.

Cela signifie que lorsqu'un utilisateur parle, l'autre utilisateur écoute, sans répondre simultanément. Cette technique est dite en anglais « push to talk » (appuyer pour parler) : l'utilisateur doit maintenir en permanence enfoncée une touche particulière, activant la fonction d'émission.

Ces produits, bien que souvent peu performants (en termes rapport signal à bruit ou de couverture géographique), s'avèrent intéressants pour des liaisons sur de courtes distances, et dans des zones non couvertes par un réseau de radiotéléphonie.

Pour pouvoir communiquer d'une part sur de longue distance, et d'autre part dans des zones non couvertes par un réseau, un individu doit donc disposer de deux appareils distincts, ce qui s'avère peu pratique, et relativement coûteux.

Bien sûr, on peut envisager de regrouper les deux appareils dans un même boîtier. Mais il sera nécessaire de juxtaposer, dans ce boîtier, les moyens numériques spécifiques à la radiotéléphonie (premier standard) et les moyens analogiques (second standard). Le gain financier sera donc faible, et le produit obtent sera encombrant, et donc peu ergonomique.

Le document de brevet EP 178 445 décrit un tel boîtier. Il existe par ailleurs des techniques qui permettent de mettre en oeuvre deux standards de radiocommunication distincts avec les mêmes moyens d'émission/réception. On peut notamment citer les documents de brevet EP 1 026 908 et WO 01/93614. L'inconvénient de ces techniques connues réside dans le fait qu'elles nécessitent l'allocation de nouvelles bandes de fréquence pour la mise en oeuvre de communications selon le second standard, ce qui suppose une adaptation des moyens d'émission/réception. Une telle adaptation est coûteuse et peu aisée.

Un objectif de l'invention est de fournir une technique permettant de mettre en oeuvre efficacement deux standards tout à fait différents, tels qu'un standard de radiocommunication et un standard de type talkie-walkie.

Ainsi, un objectif de l'invention est de fournir une telle technique, permettant la réalisation de dispositifs de radiocommunication à un coût raisonnable, et présentant un encombrement et une ergonomie acceptables.

Le document de brevet WO 01/10153 décrit un système de radiocommunication privé utilisant les fréquences d'un système de radiocommunication public. Cependant, de tels systèmes ne permettent pas de mettre en oeuvre des communications du type simplex.

Un autre objectif de l'invention est de fournir une telle technique, qui ne nécessite pas l'allocation de nouvelles bandes de fréquence.

L'invention a également pour objectif de fournir une telle technique, permettant des communications classiques, sans adaptation, au moins selon l'un des standards.

Encore un autre objectif de l'invention est de fournir une telle technique, permettant à un opérateur téléphonique d'offrir de nouveaux services de façon simple, sans nécessité de développement d'une infrastructure lourde ou complexe.

Ces objectifs, ainsi que d'autres qui apparaîtront plus clairement par la suite, sont atteints selon l'invention à l'aide d'un dispositif de radiocommunication capable de fonctionner sur au moins deux bandes de fréquence en émission et au moins deux bandes de fréquence en réception, comprenant des premiers moyens de mise en oeuvre de communications selon un premier standard prédéterminé, et des seconds moyens de mise en oeuvre de communications selon un second standard prédéterminé, en utilisant au moins en partie au moins une desdites bandes de fréquence.

Ainsi, on peut faire fonctionner le dispositif dans un second mode (par exemple de type talkie-walkie) dans des bandes proches et/ou couvrant les bandes utilisées dans le premier mode (correspondant aux radio-communications classiques).

Selon un mode de réalisation avantageux de l'invention, lesdits seconds moyens de mise en oeuvre de communications utilisent une même bande de fréquence en émission et en réception.

De façon avantageuse, ladite bande de fréquence utilisée en émission et en réception est choisie de façon à comprendre une portion dans laquelle ledit dispositif est apte à émettre selon ledit premier standard et une portion dans laquelle il est apte à recevoir selon ledit premier standard.

De façon préférentielle, lesdits premiers et seconds moyens de mise en oeuvre de communications partagent au moins une partie de leurs moyens de traitement.

Lesdits moyens de traitement partagés peuvent notamment appartenir au groupe comprenant :
- des moyens de traitement numérique ;
- des moyens de filtrage ;
- des moyens d'amplification ;
- des moyens de modulation et/ou de démodulation.

Selon un aspect avantageux de l'invention, lesdits moyens de traitement partagés comprennent des moyens numériques de traitement et des moyens de mémorisation, contenant des données de contrôle et de commande desdits moyens numériques de traitement, d'une part selon ledit premier standard et d'autre part selon ledit second standard.

Dans un premier mode de réalisation avantageux de l'invention, lesdites données de contrôle et de commande pour ledit second standard assurent la mise en oeuvre de communications numériques.

Selon un second mode de réalisation avantageux, lesdites données de contrôle et de commande pour ledit second standard assurent une simulation de communications analogiques.

Ledit premier standard prédéterminé peut notamment appartenir au groupe comprenant le GSM, le GPRS, l'UMTS. Ledit second standard peut quant à lui appartenir au groupe comprenant une technique de type talkie-walkie ou la norme « blue tooth ».

Selon une mise en oeuvre avantageuse de l'invention, lesdites bandes de fréquence d'émission sont 825-849 MHz et 880-915 MHz, et lesdites bandes de fréquence de réception sont 869-894 MHz et 925-960 MHz.

Dans ce cas, la bande de fréquence utilisée par lesdits seconds moyens de mise en oeuvre d'une communication peut être 868-870 MHz, en émission et en réception, ou 902-928 MHz.

Préférentiellement, le dispositif de l'invention comprend des éléments d'interface homme-machine spécifiques à la mise en oeuvre de communications selon ledit second standard.

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés, parmi lesquels :
- les figures 1A et 1B sont deux schémas simplifiés illustrant le principe général de l'invention, selon les deux standards distincts ;
- la figure 2 est un schéma synoptique simplifié du dispositif de radiocommunication selon l'invention ;
- les figures 3A et 3B présentent deux exemples d'utilisation des bandes de fréquence selon l'invention, adaptés respectivement à l'Europe et aux USA.

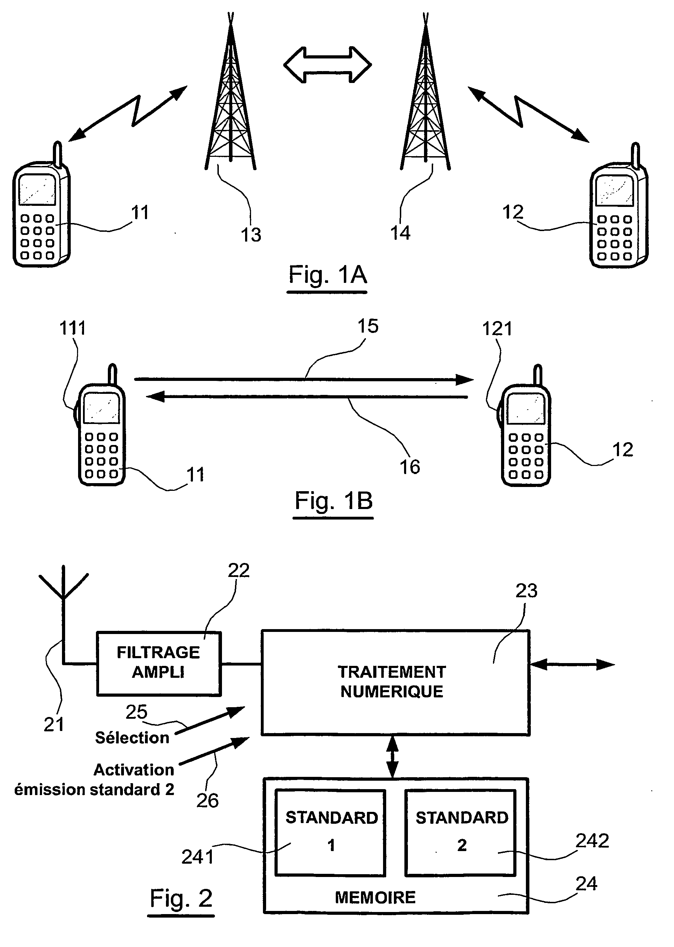

L'invention présente donc une approche nouvelle des dispositifs de radiocommunication, en particulier des radiotéléphones mobiles, mettant en oeuvre au moins deux standards. Dans le mode de réalisation particulier décrit par la suite, ces deux standards sont d'une part un standard de radiocommunication (par exemple GSM), tel qu'illustré schématiquement en figure 1A. Le second standard est un standard de type talkie-walkie (également appelé en anglais « push-to-talk ») tel qu'illustré en figure 1B.

L'invention ne concerne donc pas les radiotéléphones mettant en oeuvre deux techniques concurrentes de radiocommunication cellulaire, mais un radiotéléphone offrant en outre un autre type de service (appelé le second standard). Ce second service peut être du type talkie-walkie, mais également de type « blue tooth » ou « wifi » (marques déposées).

Selon l'invention, on ne regroupe pas dans le même appareil deux ensembles indépendants, dédiés à chacun des standards, et fonctionnant chacun sur leur bande de fréquence prédéfinie. Au contraire, on simplifie les moyens de traitement, en proposant une synergie sur les bandes de fréquence utilisées.

Plus précisément, le second standard utilise au moins en partie les bandes de fréquence utilisées selon le premier standard. On obtient ainsi d'une part un gain sur la location des bandes de fréquence qui sont une ressource rare, et d'autre part, comme on le verra par la suite, une simplification du radiotéléphone, qui peut partager une grande partie de ces moyens entre les deux standards.

Comme illustré en figure 1A, un radiotéléphone 11 selon l'invention peut bien sûr communiquer classiquement avec un autre radiotéléphone 12, selon un premier standard de type GSM, GPRS, UMTS, par exemple. La communication en full-duplex transite classiquement par les stations de base 13 et 14, dans lesquelles se situent respectivement les deux radiotéléphones 11 et 12 en communication.

Selon l'invention, et comme illustré en figure 1B, les radiotéléphones 11 et 12 peuvent également communiquer selon un second standard, et être utilisés comme des talkie-walkie classiques.

L'échange de données se fait alors directement (sans passage par des stations de base) et généralement de façon monodirectionnelle (la communication a lieu dans une seule direction 15 ou 16 à un instant donné). Les radiotéléphones 11 et 12 pourront être équipés d'un bouton spécifique 111, 121, permettant à l'utilisateur de « prendre la main », et d'émettre, tant que ce bouton est enfoncé.

Ce second mode de fonctionnement pourra notamment être utilisé pour des communications sur de courtes distances, par exemple inférieures à deux kilomètres. Il trouve donc des applications par exemple dans les domaines des loisirs, des activités sportives, de la surveillance, ..., notamment dans les lieux où il n'y a pas de couverture selon le premier standard.

Selon le second standard, il n'y a généralement pas de notion de qualité de service. En contrepartie, ce second standard présente l'avantage d'être gratuit.

La figure 2 illustre, de façon très schématique, le principe général d'un radiotéléphone 11 ou 12 selon l'invention. Il comprend une antenne 21 unique (puisque l'on utilise dans les deux cas des bandes de fréquence communes, puis le cas échéant des moyens analogiques 22 de filtrage et d'amplification).

Le dispositif comprend également des moyens 23 de traitement numérique, qui assurent classiquement les opérations de codage/décodage, modulation/démodulation, ..., selon le standard GSM. Les données permettant le contrôle et la commande de ces moyens de traitement numérique 23 sont stockées dans une première portion 241 d'une mémoire 24.

Selon l'invention, ces mêmes moyens de traitement numérique 23 peuvent également être pilotés pour fonctionner selon le second standard. Pour cela, des instructions de contrôle et de commande sont également stockées dans la mémoire 24, dans une portion 242 de celle-ci.

Ainsi, un radiotéléphone classique n'est pas, ou très peu, modifié sur le plan matériel. Seule une partie logicielle spécifique a dû être développée. Il n'y a donc pas de surcoût matériel important ni d'augmentation de la complexité.

L'interface homme/machine a simplement été légèrement complétée pour permettre d'une part la sélection 25 de l'un ou l'autre des standards, et d'autre part l'activation 26 de l'émission selon le second standard, par exemple à l'aide du bouton 111, 121. La sélection 25 peut se faire de façon manuelle, automatique ou semi-automatique. On peut par exemple prévoir que le terminal essaye tout d'abord de mettre en oeuvre le second standard, puis le premier, s'il n'a pas pu atteindre son correspondant. On peut également prévoir que ces étapes ne sont mises en oeuvre que dans l'hypothèse où on essaye de joindre un terminal 12 identifié au préalable.

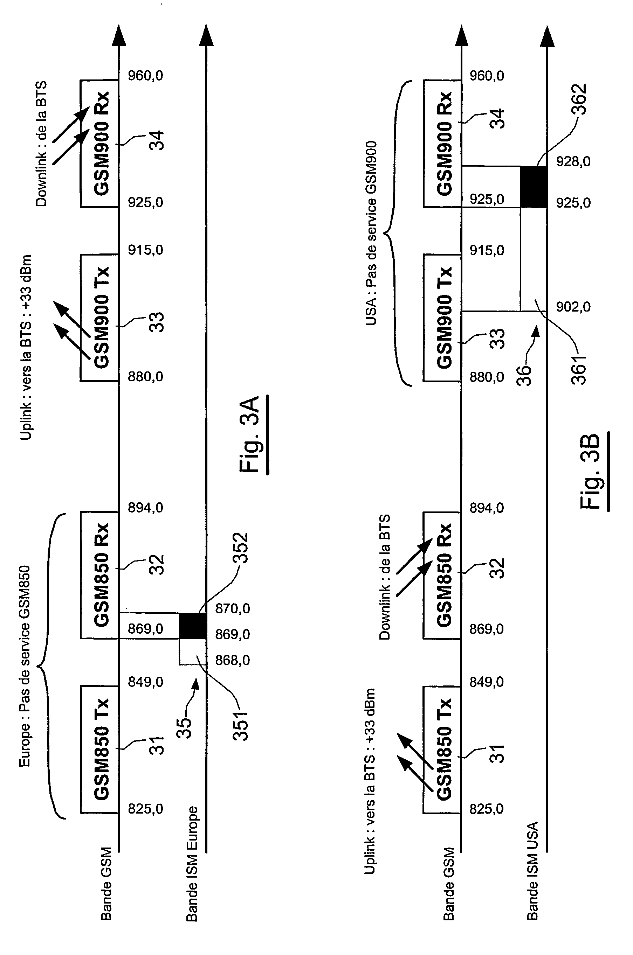

Les figures 3A et 3B illustrent deux exemples d'utilisation de la bande de fréquences, adaptée à un radiotéléphone GSM quadri-bandes, d'une part en Europe (figure 3A) et d'autre part aux USA (figure 3B).

Les radiotéléphones quadri-bandes sont prévus pour offrir deux services GSM850 et GSM900. Le GSM850 n'est pas utilisé en Europe, alors que le GSM900 n'est pas utilisé aux USA.

Les bandes réservées sont donc les suivantes :
- 31 : bande GSM850 TX en émission : 825,0 à 849,0 MHz ;
- 32 : bande GSM850 RX en réception : 869,0 à 880,0 MHz ;
- 33 : bande GSM900 TX en émission : 880,0 à 915,0 MHz ;
- 34 : bande GSM900 RX en réception : 925,0 à 960,0 Mhz.

On constate que la bande GSM850 se recoupe, en Europe, avec la bande dite ISM (« Industrial Scientific Medical » en anglais, bande réservée aux applications industrielles, scientifiques et médicales) 35, qui s'étend entre 868 et 870 MHz. Il est donc possible d'utiliser cette bande de fréquence 35 pour le second standard.

La portion 352 s'étendant entre 869,0 et 870,0 MHz coïncide avec la bande de réception 32. Le radiotéléphone est donc capable de fonctionner en réception dans cette bande. Par ailleurs, les radiotéléphones actuels sont capables d'émettre sur une plage d'émission large s'étendant de 825,0 à environ 930 MHz, de façon à englober notamment les deux bandes 31 et 33. Ils sont donc notamment capables d'émettre dans la bande 351 s'étendant entre 868,0 et 869,0 MHz.

On peut donc aisément utiliser la bande 35 en émission et en réception (dans le mode talkie walkie ou « push-to-talk » (l'émission et la réception se font sur la même bande de fréquence).

Comme on le note sur la figure 3B, le même raisonnement peut être tenu aux USA. La bande ISM 36 s'étend entre 902,0 et 928,0 MHz. Cette bande englobe d'une part une portion 362, s'étendant entre 925,0 et 928,0 MHz dans laquelle le radiotéléphone est capable de recevoir, et une bande 361, entre 902,0 et 925,0 MHz, dans laquelle le radiotéléphone peut émettre. A nouveau, il est donc possible de mettre en oeuvre le second standard sur cette bande de fréquence 36.

On constate donc, à nouveau, qu'il est possible de faire fonctionner le radiotéléphone selon les deux standards, avec les mêmes moyens de traitement numérique 23, dès lors que ceux-ci sont adaptés au premier standard. Ce premier standard met en oeuvre une modulation numérique, par exemple du type GMSK.

En ce qui concerne le second standard, deux possibilités sont envisageables.

Selon une première approche, on peut prévoir que le second standard met également en oeuvre une transmission numérique, qui peut être identique, ou très proche, de celle utilisée par le premier standard. Cette approche présente l'avantage d'une plus grande simplicité, puisque la plupart des moyens de traitement numérique 23 sont utilisés d'une façon identique ou similaire dans les deux modes de réalisation. Cela permet également d'offrir une bonne qualité de transmission, et le cas échéant des services particuliers (par exemple l'identification de l'appelant). Cependant, cette approche suppose que les deux utilisateurs disposent du même type de radiotéléphone, et n'offrent donc pas de compatibilité avec les appareils déjà disponibles dans le commerce.

On peut donc également prévoir une approche permettant d'assurer, au moins en partie, cette compatibilité, consistant à simuler numériquement une émission et une réception analogique, à l'aide des moyens de traitement numériques 23. Un exemple d'algorithme permettant d'assurer cette fonction est décrit dans la thèse « implementation of FM demodulator algorithms of a high performance digital signal processor » (implantation d'algorithmes de démodulation FM sur un processeur de traitement de signal numérique haute performance) par Franz Schnyder et Christoph Haller.

Il est ainsi possible d'ajouter simplement et efficacement un nouveau service dans un radiotéléphone, par exemple de type GSM, sans nécessiter d'allouer de nouvelles bandes de fréquence, et sans augmentation de la complexité des radiotéléphones (à l'exception d'un développement logiciel).

Cette approche permet aux opérateurs téléphoniques de ne pas installer de station de base dans des endroits non lucratifs (canyon, forêt, zone à faible densité d'habitation).

Elle assure également un avantage de type marketing, la fonctionnalité correspondant au second standard pouvant faire partie d'un lot d'offres. En outre, cette approche incitera un client à acheter deux radiotéléphones, pour pouvoir communiquer selon le second mode.

Le client économise également, de son côté, puisqu'il n'est pas obligé d'acheter un second appareil de type talkie-walkie pour communiquer selon le second standard. En outre, la solution est plus ergonomique, puisqu'il ne doit transporter qu'un seul terminal au lieu de deux.

## Revendications

1. Dispositif de radiocommunication (11) capable de fonctionner sur au moins deux bandes de fréquence en émission (31, 33) et au moins deux bandes de fréquence en réception (32, 34), comprenant des premiers moyens de mise en oeuvre dans lesdites bandes de fréquence de communications selon un premier standard (241) prédéterminé,
**caractérisé en ce qu'**il comprend des seconds moyens de mise en oeuvre de communications selon un second standard (242) prédéterminé, utilisant au moins en partie au moins une desdites bandes de fréquence (35, 36),
et **en ce que** lesdits seconds moyens de mise en oeuvre de communications utilisent une même bande de fréquence en émission et en réception.

2. Dispositif de radiocommunication selon la revendication 1, **caractérisé en ce que** ladite bande de fréquence utilisée en émission et en réception est choisie de façon à comprendre une portion (31, 33) dans laquelle ledit dispositif est apte à émettre selon ledit premier standard et une portion (32, 34) dans laquelle il est apte à recevoir selon ledit premier standard.

3. Dispositif de radiocommunication selon l'une quelconque des revendications 1 et 2, **caractérisé en ce que** lesdits premiers et seconds moyens de mise en oeuvre de communications partagent au moins une partie de leurs moyens de traitement (22, 23, 24).

4. Dispositif de radiocommunication selon la revendication 3, **caractérisé en ce que** lesdits moyens de traitement partagés appartiennent au groupe comprenant :
□ des moyens de traitement numérique (23) ;
□ des moyens de filtrage (22) ;
□ des moyens d'amplification (22) ;
□ des moyens de modulation et/ou de démodulation.

5. Dispositif de radiocommunication selon l'une quelconque des revendications 3 et 4, **caractérisé en ce que** lesdits moyens de traitement partagés comprennent des moyens numériques de traitement (23) et des moyens de mémorisation (24), contenant des données de contrôle et de commande desdits moyens numériques de traitement, d'une part (241) selon ledit premier standard et d'autre part (242) selon ledit second standard.

6. Dispositif de radiocommunication selon la revendication 5, **caractérisé en ce que** lesdites données de contrôle et de commande pour ledit second standard assurent la mise en oeuvre de communications numériques.

7. Dispositif de radiocommunication selon la revendication 5, **caractérisé en ce que** lesdites données de contrôle et de commande pour ledit second standard assurent une simulation de communications analogiques.

8. Dispositif de radiocommunication selon l'une quelconque des revendications 1 à 7, **caractérisé en ce que** ledit premier standard prédéterminé appartient au groupe comprenant le GSM, le GPRS, l'UMTS.

9. Dispositif de radiocommunication selon l'une quelconque des revendications 1 à 8, **caractérisé en ce que** ledit second standard appartient au groupe comprenant une technique de type talkie-walkie ou la norme blue tooth.

10. Dispositif de radiocommunication selon l'une quelconque des revendications 1 à 9, **caractérisé en ce que** lesdites bandes de fréquence d'émission sont 825-849 MHz et 880-915 MHz, et **en ce que** lesdites bandes de fréquence de réception sont 869-894 MHz et 925-960 MHz.

11. Dispositif de radiocommunication selon la revendication 10, **caractérisé en ce que** la bande de fréquence utilisée par lesdits seconds moyens de mise en oeuvre d'une communication est 868-870 MHz, en émission et en réception.

12. Dispositif de radiocommunication selon la revendication 10, **caractérisé en ce que** la bande de fréquence utilisée par lesdits seconds moyens de mise en oeuvre d'une communication est 902-928 MHz, en émission et en réception.

13. Dispositif de radiocommunication selon l'une quelconque des revendications 1 à 12, **caractérisé en ce qu'**il comprend des éléments d'interface homme-machine spécifiques à la mise en oeuvre de communications selon ledit second standard.

## Claims

1. Radiocommunications device (11) capable of operating on at least two transmission frequency bands (31, 33) and at least two reception frequency bands (32, 34), including first means for implementing in said frequency bands communications according to a first predetermined standard (241),
**characterised in that** it comprises second means for implementing communications according to a second predetermined standard (242), at least partially using at least one of said frequency bands (35, 36),
and **in that** said second means for implementing communications use a same frequency band for transmission and reception.

2. Radiocommunications device according to claim 1, **characterised in that** said frequency band used for transmission and reception is chosen so as to include a portion (31, 33) in which said device is capable of transmitting according to said first standard and a portion (32, 34) in which it is capable of receiving according to said first standard.

3. Radiocommunications device according to any one of claims 1 and 2, **characterised in that** said first and second means for implementing communications share at least some of their processing means (22, 23, 24).

4. Radiocommunications device according to claim 3, **characterised in that** said shared processing means belong to the group including:
- digital processing means (23);
- filtering means (22);
- amplification means (22);
- modulation and/or demodulation means.

5. Radiocommunications device according to any one of claims 3 and 4, **characterised in that** said shared processing means include digital processing means (23) and storage means (24), containing data for commanding and controlling said digital processing means, according to said first standard (241) and according to said second standard (242).

6. Radiocommunications device according to claim 5, **characterised in that** said command and control data for said second standard provide the implementation of digital communications.

7. Radiocommunications device according to claim 5, **characterised in that** said command and control data for said second standard provide a simulation of analog communications.

8. Radiocommunications device according to any one of claims 1 to 7, **characterised in that** said first predetermined standard belongs to the group including GSM, GPRS and UMTS.

9. Radiocommunications device according to any one of claims 1 to 8, **characterised in that** said second standard belongs to the group including a walkie-talkie-type technique or the "Bluetooth" standard.

10. Radiocommunications device according to any one of claims 1 to 9, **characterised in that** said transmission frequency bands are 825-849 MHz and 880-915 MHz, and **in that** said reception frequency bands are 869-894 MHz and 925-960 MHz.

11. Radiocommunications device according to claim 10, **characterised in that** the frequency band used by said second means for implementing communications is 868-870 MHz, for transmission and reception.

12. Radiocommunications device according to claim 10, **characterised in that** the frequency band used by said second means for implementing communications is 902-928 MHz, for transmission and reception.

13. Radiocommunications device according to any one of claims 1 to 12, **characterised in that** it includes user-system interface elements specific to the implementation of communications according to said second standard.

## Patentansprüche

1. Funkkommunikations-Vorrichtung (11), die auf mindestens zwei Frequenzbändern zum Senden (31, 33) und auf mindestens zwei Frequenzbändern zum Empfangen (32, 34) funktionsfähig ist, wobei sie erste Mittel zum Ausführen von Kommunikation in den Frequenzbändern nach einem ersten vorbestimmten Standard (241) aufweist,
**dadurch gekennzeichnet, dass** die Vorrichtung zweite Mittel zum Ausführen von Kommunikation nach einem zweiten vorbestimmten Standard (242) aufweist, die zumindest teilweise mindestens eines der Frequenzbänder (35, 36) verwenden,
und dass die zweiten Mittel zum Ausführen von Kommunikation ein gleiches Frequenzband zum Senden und zum Empfangen verwenden.

2. Funkkommunikations-Vorrichtung nach Anspruch 1, **dadurch gekennzeichnet, dass** das zum Senden und zum Empfangen verwendete Frequenzband in einer Weise ausgewählt ist, dass es einen Bereich (31, 33) enthält, in der die Vorrichtung in der Lage ist nach dem ersten Standard zu senden, und einen Bereich (32, 34) enthält, in der die Vorrichtung in der Lage ist nach dem ersten Standard zu empfangen.

3. Funkkommunikations-Vorrichtung nach einem der Ansprüche 1 und 2, **dadurch gekennzeichnet, dass** die ersten und zweiten Mittel zum Ausführen von Kommunikation mindestens einen Teil ihrer Verarbeitungsmittel (22, 23, 24) gemeinsam nutzen.

4. Funkkommunikations-Vorrichtung nach Anspruch 3, **dadurch gekennzeichnet, dass** die gemeinsam genutzten Verarbeitungsmittel zu der Gruppe gehören, die aufweist:
- digitale Verarbeitungsmittel (23);
- Filterungsmittel (22);
- Verstärkungsmittel (22);
- Modulations- und/oder Demodulationsmittel.

5. Funkkommunikations-Vorrichtung nach einem der Ansprüche 3 und 4, **dadurch gekennzeichnet, dass** die gemeinsam genutzten Verarbeitungsmittel digitale Verarbeitungsmittel (23) und Speicherungsmittel (24) enthalten, die Kontroll- und Ausführurigsdaten der digitalen Verarbeitungsmittel zum einen Teil (241) nach dem ersten Standard und zum anderen Teil (242) nach dem zweiten Standard beinhalten.

6. Funkkommunikations-Vorrichtung nach Anspruch 5, **dadurch gekennzeichnet, dass** die Kontroll- und Ausführurigsdaten für den zweiten Standard die Ausführung von digitaler Kommunikation sicherstellen.

7. Funkkommunikations-Vorrichtung nach Anspruch 5, **dadurch gekennzeichnet, dass** die Kontroll- und Ausführungsdaten für den zweiten Standard eine Simulation von analoger Kommunikation sicherstellen.

8. Funkkommunikations-Vorrichtung nach einem der Ansprüche 1 bis 7, **dadurch gekennzeichnet, dass** der erste vorbestimmte Standard der Gruppe angehört, die GSM, GPRS, UMTS enthält.

9. Funkkommunikations-Vorrichtung nach einem der Ansprüche 1 bis 8, **dadurch gekennzeichnet, dass** der zweite Standard der Gruppe angehört, die eine Technik nach der Art von Hand-Funksprechgeräten oder den Bluetoothstandard enthält.

10. Funkkommunikations-Vorrichtung nach einem der Ansprüche 1 bis 9, **dadurch gekennzeichnet, dass** die Sendefrequenzbänder 825-849 MHz und 880-915 MHz abdecken und dass die Empfangsfrequenzbänder 869-894 MHz und 925-960 MHz abdecken.

11. Funkkommunikations-Vorrichtung nach Anspruch 10, **dadurch gekennzeichnet, dass** das Frequenzband, welches von den zweiten Mitteln zum Ausführen von Kommunikation zum Senden und zum Empfangen verwendet wird, 868-870 MHz abdeckt.

12. Funkkommunikations-Vorrichtung nach Anspruch 10, **dadurch gekennzeichnet, dass** das Frequenzband, welches von den zweiten Mitteln zum Ausführen von Kommunikation zum Senden und zum Empfangen verwendet wird, 902-928 MHz abdeckt.

13. Funkkommunikations-Vorrichtung nach einem der Ansprüche 1 bis 12, **dadurch gekennzeichnet, dass** die Vorrichtung spezifische Mensch-Maschine-Schnittstellenelemente zum Ausführen von Kommunikation nach dem zweiten Standard enthält.
